Europäisches Patentamt

European Patent Office

Office européen des brevets

(11) Veröffentlichungsnummer : **0 427 730 B1**

(19)

(12)
# EUROPÄISCHE PATENTSCHRIFT

(45) Veröffentlichungstag der Patentschrift :
**15.04.92 Patentblatt 92/16**

(21) Anmeldenummer : **89906086.7**

(22) Anmeldetag : **03.06.89**

(86) Internationale Anmeldenummer :
**PCT/EP89/00623**

(87) Internationale Veröffentlichungsnummer :
**WO 90/01453 22.02.90 Gazette 90/05**

(51) Int. Cl.$^5$ : **B65G 67/60**

(54) **EINRICHTUNG ZUM BE- UND ENTLADEN VON STÜCKGUT.**

(30) Priorität : **30.07.88 DE 3826050**

(43) Veröffentlichungstag der Anmeldung :
**22.05.91 Patentblatt 91/21**

(45) Bekanntmachung des Hinweises auf die
Patenterteilung :
**15.04.92 Patentblatt 92/16**

(84) Benannte Vertragsstaaten :
**AT BE CH DE FR GB IT LI LU NL SE**

(56) Entgegenhaltungen :
**DE-C- 3 720 093**
**NL-A- 7 811 107**

(73) Patentinhaber : **O&K Orenstein & Koppel**
**Aktiengesellschaft**
**Brunsbütteler Damm 144-208**
**W-1000 Berlin 20 (DE)**

(72) Erfinder : **STECKEL, Horst**
**Rosenstr. 5**
**W-6670 St. Ingbert (DE)**
Erfinder : **STENGER, Erich**
**Am Kellerberg 6**
**W-6683 Spiesen-Elversberg (DE)**

## Beschreibung

Die Erfindung betrifft eine Einrichtung zum Be- und Entladen von Stückgut, insbesondere Wendelförderer, mit einem oberen Auf- bzw. Abgabebereich, einem unteren Ab- bzw. Aufgabebereich sowie einem mit beiden Bereichen zusammenwirkenden Vertikalförderer.

Durch die DE-B-12 90 875 ist eine derartige Vorrichtung zum Be- und Entladen, insbesondere von Schiffen mit Stück- und/oder Schüttgut vorbekannt. Diese besteht aus einem Portal mit einem einen Förderer aufweisenden höhenverschwenkbaren Auslegerarm, der an seinem freien Ende ein senkrechtes Trägergestell mit einem wendelförmigen, als über Leitrollen geführtes endloses Förderband ausgebildetes Förderorgan trägt, dessen oberes freies Ende im Bereich der Abgabeseite des in dem verschwenkbaren Auslegerarm gelagerten Förderers angeordnet ist, dem auf der Brückenplattform vorgesehene Zuführbänder vorgeschaltet sind. Unterhalb des in dem Trägergestell gehaltenen wendelförmigen Förderers ist ein zweiter wendelförmiger Förderer in einem innerhalb des Trägergestelles geführten und um seine Längsachse drehbaren Haltegestell angeordnet, das an seiner Außenwandung mit schraubengewindeförmigen Profilen versehen ist, die mit an der Innenwandung des Trägergestelles ausgebildeten Gegenprofilen im Eingriff stehen. Im Bereich der Abgabestelle des zweiten wendelförmigen Förderers ist ein Horizontalförderer angeordnet.Das Verschwenken des Horizontalförderers um mindestens 360° während des Betriebes um die senkrechte Achse des Senkrechtförderers kann durch Verschrauben des Haltegestells im Trägergestell erreicht werden. Nachteilig an einer derartigen Konstruktion ist zu bemerken, daß zur Erzeugung der horizontalen Drehbewegung des horizontalen Förderers dieser über verhältnismäßig umfangreiche konstruktive Baumaßnahmen von unten in den eigentlichen Vertikalförderer hineingeschraubt werden muß. Infolge dieser Maßnahme wird der Horizontalförderer in Abhängigkeit vom Drehwinkel ständig angehoben bzw. abgesenkt. Dieser Nachteil wiederum muß durch Nachführen des Auslegers bzw. des Vertikalförderers ausgeglichen werden.

Der Erfindung liegt die Aufgabe zugrunde, eine Einrichtung, wie sie im gattungsbildenden Teil des ersten Patentanspruches beschrieben ist dahingehend weiterzubilden, daß bei möglichst einfachem konstruktivem Aufbau eine Drehbewegung des Horizontalförderers um mindestens 360° ermöglicht werden kann, ohne daß dieser im Verlauf der Drehbewegung Höhenunterschieqe im Verhältnis zum Vertikalförderer ausführen muß.

Diese Aufgabe wird erfindungsgemäß dadurch gelöst, daß der Drehbereich der Einrichtung, über mindestens 360° Drehwinkel gesehen, auf den Bereich der oberen Auf- bzw. Abgabe sowie den Bereich der unteren Ab- bzw. Aufgabe aufgeteilt ist. Durch diese Maßnahme wird erreicht, daß aufwendige Bauteile wie Trägergestelle, Haltegestelle oder dgl. nicht mehr benötigt werden. Der Aufbau wird im Gegensatz zum St. d. T. wesentlich vereinfacht, wodurch auch die Fertigungs- und Wartungskosten gesenkt werden können.

Vorzugsweise ist der Drehbereich jeweils etwa hälftig auf den Bereich der oberen Auf- bzw. Abgabe sowie den Bereich der unteren Ab- bzw. Aufgabe aufgeteilt. In Abhängigkeit vom Anwendungsfall sind natürlich auch andere Aufteilungen möglich. Die Aufteilung des Drehbereiches wird einem weiteren Gedanken der Erfindung gemäß zwischen den genannten Bereichen dergestalt gelöst, daß mindestens eine Kugeldrehverbindung in diesen Bereichen angeordnet wird. Jede der Kugeldrehverbindungen ist mit einem separaten Antrieb ausgerüstet, um so durch unabhängige Drehbewegung jeden beliebigen Drehwinkel im Verhältnis zum Vertikalförderer erreichen zu können. Der untere Horizontalförderer, der vorzugsweise als Teleskopförderer ausgebildet ist, verbleibt in jeder Schwenkposition, über mindestens 360° gesehen, in der gleichen vertikalen Höhe.

Ferner wird vorgeschlagen, bei Verwendung eines Wendelförderers als Vertikalförderer den Übergang vom Wendelförderer in den jeweiligen Auf- bzw. Abgabebereich durch einen Rollentisch auszubilden. Die Rollentische weisen entsprechende Übergabezungen auf, so daß ein Be- und Entladen in gleichem Maße problemlos durchgeführt werden kann. Bei Drehung des Horizontalförderers bzw. des Senkrechtförderers wird der Rollentisch über den vorgesehenen Drehbereich in die jeweilige Wendel über eine vorgegebene Steigung hineingedreht.

Einem weiteren Gedanken der Erfindung gemäß ist der untere Rollentisch um die korrespondierende horizontale Rotationsachse des als Teleskopförderer ausgebildeten unteren Ab- bzw. Aufgabebereiches schwenkbar. Durch diese Maßnahme wird erreicht, daß beim Ein- und Ausbringen des Vertikalförderers, z.B. in den Laderaum eines Schiffes, verhältnismäßig wenig Platz benötigt wird, da der Teleskopförderer samt auf ihm liegendem Tisch in etwa vertikaler Position in die Ladeluke eingeführt und erst im Laderaum in eine horizontale Stellung gebracht wird. Ist dies geschehen, kann der untere Rollentisch um die genannte Rotationsachse um 180° geschwenkt werden und kommt im unteren Wendelgang des Wendelförderers zur Anlage.

Die Vorteile der genannten erfindungsgemäßen Merkmale sind nicht nur für Wendelförderer sondern auch auf alternative in beispielsweise Laderäumen von Schiffen arbeitenden Vertikalförderern anwendbar.

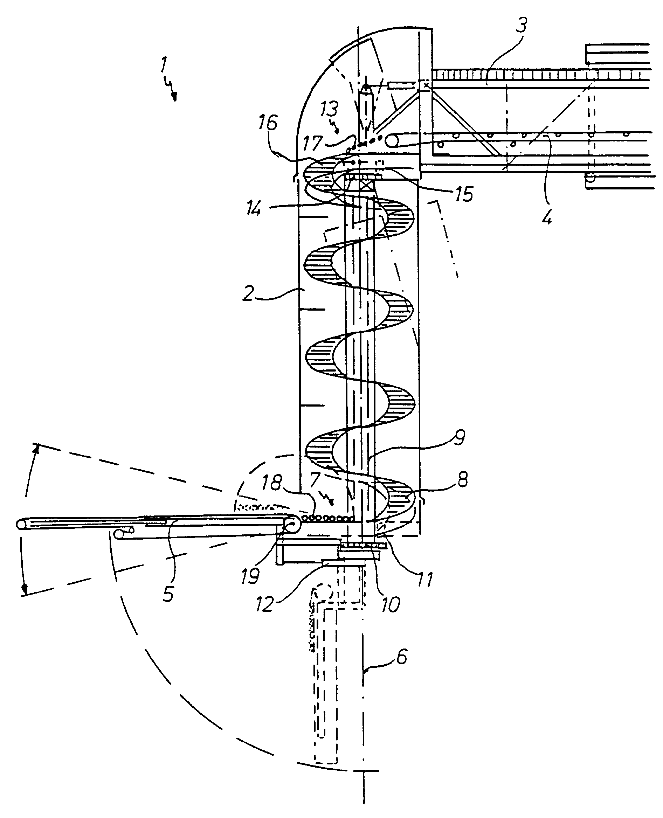

Die Erfindung ist in der Zeichnung anhand eines Ausführungsbeispieles dargestellt und wird wie folgt beschrieben:

Die einzige Figur zeigt einen Vertikalförderer 1, der als Wendelförderer 2 ausgebildet ist. Dieser ist im Bereich seines oberen Endes am Ausleger 3 eines nicht weiter dargestellten verfahrbaren Portales angelenkt, wobei im Bereich des Auslegers 3 ein Förderband 4 vorgesehen ist. Im unteren Bereich weist der Wendelförderer 2 einen teleskopierbaren Gurtförderer 5 auf, der um die Vertikalachse 6 des Wendelförderers 2 in Umfangsrichtung geschwenkt werden kann. Der Drehbereich der Einrichtung 1 ist wie folgt aufgeteilt:

Es wird für dieses Beispiel angenommen, daß der Fördersinn von unten nach oben erfolgt. Im unteren Aufgabebereich 7 vom Teleskopförderer 5 in die erste Wendel 8 des Wendelförderers 2 ist zwischen dem Teleskopförderer 5 und der Zentralsäule 9 des Wendelförderers 2 eine Kugeldrehverbindung 10 mit entsprechendem Antrieb 11 vorgesehen. Der Teleskopförderer 5 selber ist über eine Kolbenzylindereinheit 12 zum Zwecke des Ein- und Ausbringens in entsprechende nicht weiter dargestellte Ladeluken entlang der Vertikalachse 6 in eine im wesentlichen vertikale Position bringbar. Der untere Drehbereich für die Aufgabe 7 beträgt in diesem Beispiel 180°. Im oberen Abgabebereich 13 ist im Bereich der Zentralsäule 9 eine weitere Kugeldrehverbindung 14 mit Antrieb 15 vorgesehen. Diese Kugeldrehverbindung 14 ergänzt den Drehbereich der unteren Kugeldrehverbindung 10 auf 360°. Durch diese Maßnahme kann der Teleskopförderer 5 ohne seine Höhe im Verhältnis zum Wendelförderer 2 zu verändern um mindestens 360° um die Vertikalachse 6 des Wendelförderers 2 geschwenkt werden.

Die jeweiligen Übergabestellen zwischen dem Förderband 4 und der oberen Wendel 16 des Wendelförderers 2 sowie dem Teleskopförderer 5 und der unteren Wendel 8 des Wendelförderers 2 werden durch jeweils einen Rollentisch 17,18 gebildet. Die Rollentische 17,18 sind für die jeweils etwa 180° betragende Drehbewegung in den jeweiligen Wendelgang 8,16 hineindrehbar. Der untere Rollentisch 18 ist zum Zwecke des problemlosen Ein- und Ausbringens der Kombination Wendelförderer 2 und Teleskopförderer 5 um die Rotationsachse 19 des Teleskopförderers 5 um 180° schwenkbar und kommt somit auf dem Teleskopförderer 5 zur Auflage. Der beschriebene Vorgang ist natürlich in umgekehrter Richtung ebenfalls realisierbar, wobei der Abgabebereich 13 dann zum Aufgabebereich wird und der Aufgabebereich 7 dann zum Abgabebereich wird.

## Patentansprüche

1. Einrichtung zum Be- und Entladen von Stückgut, insbesondere Wendelförderer, mit einem oberen Auf- bzw. Abgabebereich (13), einem unteren Ab- bzw. Aufgabebereich (7) sowie einem mit beiden Bereichen zusammenwirkenden Vertikalförderer (2), dadurch gekennzeichnet, daß der Drehbereich der Einrichtung (1), über mindestens 360° Drehwinkel gesehen, auf den Bereich der oberen Auf- bzw. Abgabe (13) sowie den Bereich der unteren Ab- bzw. Aufgabe (7) aufgeteilt ist.

2. Einrichtung nach Anspruch 1, dadurch gekennzeichnet, daß der Drehbereich jeweils etwa hälftig auf den Bereich der oberen Aufbzw. Abgabe (13) sowie den Bereich der unteren Ab- bzw. Aufgabe (7) aufgeteilt ist.

3. Einrichtung nach den Ansprüchen 1 und 2, dadurch gekennzeichnet, daß zwischen dem oberen Auf- bzw. Abgabebereich (13) und dem Vertikalförderer (2) und/oder zwischen dem unteren Ab- bzw. Aufgabebereich (7) und dem Vertikalförderer (2) mindestens eine Kugeldrehverbindung (10,14) mit zugehörigem Antrieb (11,15) vorgesehen ist.

4. Einrichtung nach den Ansprüchen 1 bis 3, dadurch gekennzeichnet, daß bei Verwendung eines Wendelförderers (2) als Vertikalförderer der Übergang vom Wendelförderer (2) in den jeweiligen Übergabebereich (8,16) durch jeweils einen Rollentisch (17,18) gebildet ist.

5. Einrichtung nach den Ansprüchen 1 bis 4, dadurch gekennzeichnet, daß der untere Rollentisch (18) um eine korrespondierende horizontale Rotationsachse (19) des als Teleskopförderers (5) ausgebildeten unteren Ab- bzw. Aufgabebereiches (7) etwa in Vertikalposition schwenkbar ist.

## Claims

1. Device for loading and unloading discrete articles, especially a helical conveyor, having an upper delivery or discharge region (13), a lower discharge or delivery region (7), and also a vertical conveyor (2) cooperating with both regions, characterised in that the slewing range of the device (1), seen over an angle of rotation of at least 360°, is divided up into the region of the upper delivery or discharge (13) and the region of the lower discharge or delivery (7).

2. Device according to Claim 1, characterised in that the slewing range is in each case divided up approximately by half into the region of the upper delivery or discharge (13) and the region of the lower discharge or delivery (7).

3. Device according to Claims 1 and 2, characterised in that between the upper delivery or discharge region (13) and the vertical conveyor (2) and/or between the lower discharge or delivery region (7) and the vertical conveyor (2), at least one ball bearing slewing rim (10,14) with corresponding drive (11,15) is provided.

4. Device according to Claims 1 to 3, characterised in that when using a helical conveyor (2) as vertical conveyor, the transition from the helical conveyor (2) into the respective transfer region (8,16) is formed in each case by a roller table (17,18).

5. Device according to Claims 1 to 4, characterised in that the lower roller table (18) is pivotable about a corresponding horizontal rotation axis (19) of the lower discharge or delivery region (7), which is in the form of a telescopic conveyor (5), approximately into a vertical position.

## Revendications

1. Dispositif pour charger et décharger un matériau en morceaux, notamment un convoyeur hélicoïdal, comportant une zone supérieure d'introduction ou d'évacuation (13), une zone inférieure d'évacuation ou d'introduction (7) ainsi qu'un convoyeur vertical (2) coopérant avec ces deux zones, caractérisé en ce que la gamme de rotation du dispositif (1), est répartie, lorsqu'on regarde sur un angle de rotation d'au moins 360°, entre la zone supérieure d'introduction ou d'évacuation (13) et la zone inférieure d'évacuation ou d'introduction (7).

2. Dispositif selon la revendication 1, caractérisé en ce que la gamme de rotation est répartie approximativement par moitiés entre la zone supérieure d'introduction ou d'évacuation (13) et la zone inférieure d'évacuation ou d'introduction (7).

3. Dispositif selon les revendications 1 et 2, caractérisé en ce qu'au moins une couronne rotative à billes (10,14), à laquelle est associé un dispositif d'entraînement (11,15), est prévue entre la zone supérieure d'introduction ou d'évacuation (13) et le convoyeur vertical (2) et/ou entre la zone inférieure d'évacuation ou d'introduction (7) et le convoyeur vertical (2).

4. Dispositif selon les revendications 1 à 3, caractérisé en ce que, dans le cas de l'utilisation d'un convoyeur hélicoïdal (2) en tant que convoyeur vertical, la jonction entre le convoyeur hélicoïdal (2) et la zone respective de transfert (8,16) est formée respectivement par une table à rouleaux (17,18).

5. Dispositif selon la revendication 1 à 4, caractérisé en ce que la table à rouleaux inférieure (18) peut venir approximativement dans une position verticale, par pivotement autour d'un axe horizontal correspondant de rotation (19) de la zone inférieure d'évacuation ou d'introduction (7) réalisée sous la forme d'un convoyeur télescopique (5).